# EUROPEAN PATENT APPLICATION

(11) **EP 1 819 160 A2**
(43) Date of publication of application: **15.08.2007**
(21) Application number: 07290157.2
(22) Date of filing: 07.02.2007
(51) Int. Cl.: H04N 5/782

(54) **A display device for recording a broadcast program and the method thereof**

(30) Priority: 10.02.2006 KR 20060012869
(71) Applicant: LG Electronics Inc., Youngdungpo-Gu Seoul (KR)
(72) Inventor: Kim, Yong Chul, Seo-gu Gwangju (KR)
(74) Representative: Loisel, Bertrand

(57) **Abstract**

The display device comprises a receiver (106-116) for receiving a broadcast program and a program guide information, a recorder (118,120) for recording the broadcast program, a memory (102) for saving a recording end time of the broadcast program, and a controller (100) for changing the recording end time of the broadcast program according to a change of the program guide information. Also, a method for recording a broadcast program comprises retrieving (128) program guide information while recording the broadcast program, checking a change (130) in the program guide information, and changing a recording end time of the broadcast program according to the changed program guide information while recording the broadcast program.

## Description

This application claims the benefit of Korean Patent Application No. 10-2006-012869, filed on February 10, 2006, which is hereby incorporated by reference.

### BACKGROUND OF THE INVENTION

### Field of the Invention

The present invention relates to a display device, and more particularly, to a display device for recording a broadcast program and the method thereof.

### Discussion of the Related Art

Heretofore, broadcast programs were recorded on a storage area for future viewing. Moreover, a display device with a Personal Video Recorder (PVR) includes a hard disk driver saving and replaying the recorded programs. According to the conventional PVR function, if a user requests to record a broadcast program, the start time and the end time of the program are retrieved from a program guide such as Electronic Program Guide (EPG). However, if the start time and the end time of the program are changed, it is difficult to end the recording at the very end of the program.

Therefore, it is highly desired to develop a display device to record only the desired program by informing the exact end time of the program, not more or not less.

### SUMMARY OF THE INVENTION

Accordingly, the present invention is directed to a display device for recording a broadcast program and the method thereof that substantially obviates one or more problems due to the limitations and disadvantages of the related art.

An object of the present invention is to provide recording only the requested broadcast program by frequently changing the recording end time.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a display device for recording a program comprises a receiver for receiving a broadcast program and a program guide information, a recorder for recording the broadcast program, a memory for saving a recording end time of the broadcast program, and a controller for changing the recording end time of the broadcast program according to a change of the program guide information.

In another aspect of the present invention, a method for recording a broadcast program comprises retrieving program guide information while recording the broadcast program, checking a change in the program guide information, and changing a recording end time of the broadcast program according to the changed program guide information while recording the broadcast program.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG.1 illustrates a block diagram of a display device of the present invention; and

FIG. 2 illustrates a flowchart for recording a broadcast program of the present invention;

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

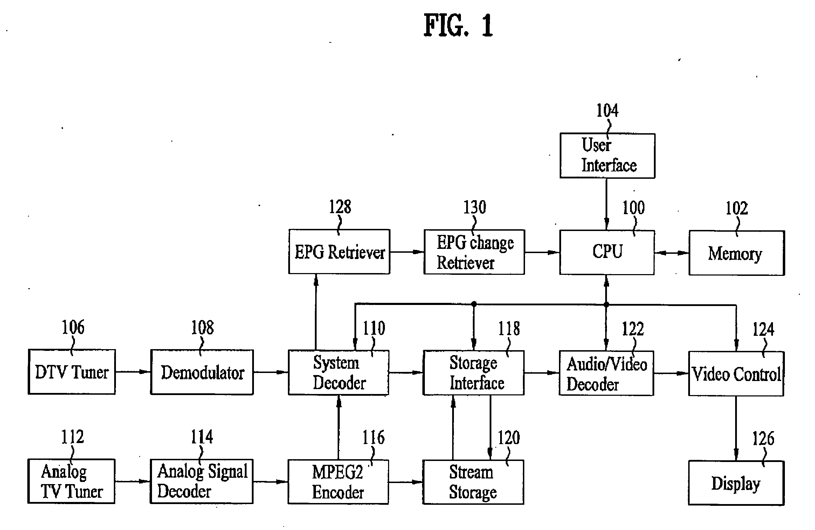

FIG. 1 shows an exemplary display device. The conventional elements are omitted in this diagram. The display device may include a digital television, a personal video recorder (PVR), a digital video recorder (DVR), and various formats of recording elements such as Hard Disk Drive (HDD), MD, Digital Video Drive (DVD)+R/-R, DVD+RW/-RW, a memory card, and Digital-Video Home System (D-VHS).

The central processing unit (CPU) (100) of the display device not only controls the overall operation of the device, but also changes recording end time information of the program when the user requests changing the end time of the recording.

The memory (102) saves various programs and information including recording end time information of the desired program.

In the display device, a user inputs commands through the user interface (104) which includes a remote control, a keyboard, a mouse, a mechanical button, local keys attached in the device and a graphic user interface (GUI).

The digital television (DTV) tuner (106) receives digital broadcasting signals through digital television broadcasting channels and provides it to the demodulator (108) which demodulates the signals into transport streams and sends to the system decoder (110).

Analog television tuner (112) receives analog broadcasting signals through analog television broadcasting channels and provides it to the analog signal decoder (114) which decodes the signals and sends to the MPEG encoder (116).

The MPEG encoder (116) encodes analog-decoded broadcast signals and provides it to the system decoder (110).

The system decoder (110) decodes the transport streams from demodulator (108) into audio stream, video stream and data stream, and provides those streams to storage interface (118), audio/video decoder (122), CPU (100) and EPG retriever (128).

The EPG retriever (128) receives data stream from the system decoder (110), retrieves broadcast guide information such as Electronic Program Guide (EPG) from the data stream, and provides it to the EPG change retriever (130) which retrieves changed information and provides it to the CPU (100).

The storage interface (118) stores the audio and video streams from system decoder (110) at the stream storage (120) according to the control of the CPU (100).

The stream storage (120) is a kind of storage device and stores broadcast streams.

The audio/video decoder (122) decodes audio/video streams from real-time broadcast or the stream storage (120) into audio/video data, and provides the audio/video data to the video control (124).

The video control (124) provides the audio/video data to the display (126) for displaying. The display (126) has On Screen Display (OSD) function.

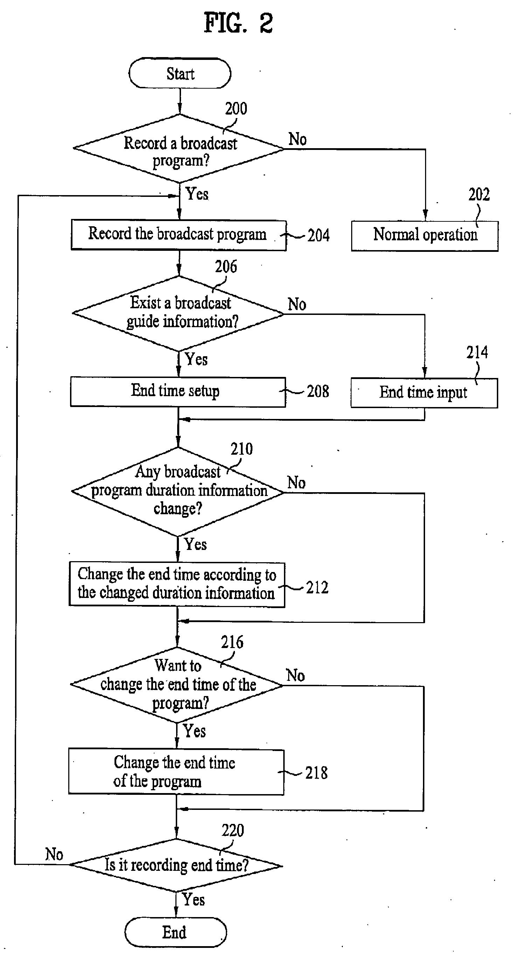

Now, operations for recording broadcast programs of the present invention are explained in FIG. 2.

The CPU (100) checks if the recording starting time has come or any recording command from the user is inputted (200).

If the recording is requested, the CPU (100) tunes to the requested broadcasting channel and records the tuned broadcast program by controlling storage interface (118) at the stream storage (120) (204).

While recording, the CPU (100) checks whether there is any broadcast program guide information for the requested program (206). The broadcast program guide information includes Electronic Program Guide (EPG) and Program and System Information Protocol (PSIP).

If there is any broadcasting guide information, the CPU (100) retrieves the end time of the program and sets the retrieved end time as recording end time (208).

If there is no broadcasting guide information, the CPU (100) asks the user input the end time, and the inputted end time as the recording end time (214).

After setting up the recording end time, the CPU (100) checks if the duration or time of the recording program has been changed (210).

If the duration or time of the recording program is changed, the CPU changes the end time of the recording according to the changed information (212).

Moreover, after setting up the recording end time, the CPU (100) checks if the user wants to change the recording end time (216).

If the change of the recording end time is requested, the CPU (100) changes the recording end time according to the inputted information (218).

The above checking for any changed information is continued until the currently set recording end time (220).

While the invention has been described with respect to the physical embodiments constructed in accordance therewith, it will be apparent to those skilled in the art that various modifications, variations and improvements of the present invention can be made without departing from the spirit or scope of the inventions. Thus, it is intended that the present invention covers the modifications and variations of this invention provided they come within the scope of the appended claims and their equivalents.

## Claims

1. A display device for recording a program comprising:
a receiver for receiving a broadcast program and a program guide information;
a recorder for recording the broadcast program;
a memory for saving a recording end time of the broadcast program; and
a controller for changing the recording end time of the broadcast program according to a change of the program guide information.

2. The display device of claim 1, further comprising a display for displaying the recorded program.

3. The display device of claim 2, wherein the display has an On Screen Display (OSD) function for asking if the user wants to play the recorded program.

4. The display device of claim 1, further comprising a user interface by which a user inputs the recording end time.

5. The display device of claim 4, wherein the user interface is one of a remote control, a keyboard, a mouse, a mechanical button, and a graphic user interface (GUI).

6. A method for recording a broadcast program comprising:
retrieving program guide information while recording the broadcast program;
checking a change in the program guide information; and
changing a recording end time of the broadcast program according to the changed program guide information while recording the broadcast program.

7. The method of claim 6, further comprising displaying the recorded program.

8. The method of claim 6, wherein the program guide information includes Electronic Program Guide (EPG) and Program and System Information Protocol (PSIP).

9. The method of claim 6, further comprising asking if the user wants to input the recording end time of the broadcast program.

10. The method of claim 6, wherein the changing of the recording end time is made until the recording end time.
